(19) Europäisches Patentamt
European Patent Office
Office européen des brevets

(11) **EP 3 855 643 B1**

(12) **EUROPEAN PATENT SPECIFICATION**

(45) Date of publication and mention
of the grant of the patent:
**01.11.2023 Bulletin 2023/44**

(21) Application number: **21152709.8**

(22) Date of filing: **21.01.2021**

(51) International Patent Classification (IPC):
***H04B 7/185*** (2006.01)  ***G01S 5/02*** (2010.01)
***G01S 5/00*** (2006.01)

(52) Cooperative Patent Classification (CPC):
**H04B 7/1851; G01S 5/0036; G01S 5/0269;**
G01S 2205/01

(54) **METHOD AND SYSTEM FOR LOCALIZING SATELLITE TERMINALS**

VERFAHREN UND SYSTEM ZUR LOKALISIERUNG VON SATELLITENTERMINALS

PROCÉDÉ ET SYSTÈME DE LOCALISATION DE TERMINAUX PAR SATELLITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2020 LU 101614**

(43) Date of publication of application:
**28.07.2021 Bulletin 2021/30**

(73) Proprietor: **Databourg Systems s.à r.l.-s**
**7364 Bofferdange (LU)**

(72) Inventor: **Gharanjik, Ahmad**
**7364 Bofferdange (LU)**

(74) Representative: **Wagner, Jean-Paul**
**Corax IP**
**2, rue Wilson**
**2732 Luxembourg (LU)**

(56) References cited:
**WO-A1-98/18214       WO-A1-2017/116534**
**WO-A2-2006/044291    US-A1- 2003 146 871**
**US-B1- 6 240 369**

## Description

## Technical field

The invention lies in the field of satellite communication system. In particular, the invention relates to a method and system for localizing a ground-based satellite terminal.

## Background of the invention

Satellite communication links are used for example to broadcast video or television signals, to transfer data between two ground stations using a high capacity broadband channel. A satellite is typically equipped with telemetry equipment which enables its positioning in orbit around the Earth, and with a functional payload implementing the satellite's application functionality. The payload may comprise a transceiver module, for receiving a signal on an uplink from a first ground based terminal, and for retransmitting it on a downlink to a second ground based terminal, which is remote from the first terminal. Any ground based satellite terminal that is located within the footprint or ground spot covered by the beam of a transmit antenna of a satellite may establish a downlink channel from the satellite. Any ground based terminal that is located within the footprint or ground spot covered by the beam of receive antenna of a satellite may establish an uplink channel to the satellite. The satellite operator may monitor the usage of the resources on the satellite's payload. Aside from knowing that ground based terminals communicating via the satellite's payload must be located within either of said footprints, which may cover thousands of square kilometres, the satellite operator has little or no information on where on the ground those terminals are precisely located.

For several purposes, it may be interesting to have access to more precise geographic positioning data of ground based terminals. For example, knowing where on the ground the data receiving terminals are located may have an impact on a satellite's resource allocation, in particular if the satellite has the ability to transmit data using multiple sub-beams, or to adjust its antenna transmission pattern. If the terminals are clustered in a specific geographic area, a higher availability may for example be achieved by serving the corresponding sub-beam more often, or with a higher capacity.

The ground based terminal devices such as broadband and satellite TV receivers or computing devices that are connected to satellite data terminals, often have no access or limited knowledge of their own location or geographical coordinates. In these circumstances, they cannot communicate their own location to the satellite, or to the satellite operator.

It is therefore difficult to estimate the position of a ground based satellite terminal in a traditional satellite communication system, without resorting to dedicated services such as Global Positioning System, GPS or the like.

Patent document WO 2017/116534 A1 discloses systems and methods for managing one or more ground stations that track satellites. A method for estimating the geographical position of a terrestrial satellite terminal based on link quality is also disclosed.

Patent documents WO 98/18214 discloses a method to plan a system resource allocation to minimize an amount of power required to close communication links between user terminal and satellites, based on data derived from propagation related attenuation-inducing events.

## Technical problem to be solved

It is an objective of the invention to present a method, which overcomes at least some of the disadvantages of the prior art. In particular, it is an objective of the invention to provide a method and system for estimating the geographical position of ground based satellite terminals, without resorting to dedicated services such as Global Positioning System, GPS, or the like.

## Summary of the invention

According to a first aspect of the invention, a method for estimating the geographical position of a terrestrial satellite terminal if provided. The method is remarkable in that it comprises the steps of:

   a) providing first time series data in a first memory element, the first time series data providing an indication of the channel quality between the terminal and a satellite during a given timespan;
   b) providing a plurality of second time series data in a second memory element, wherein each second time series data indicates a precipitation amount for an associated geographical region within said satellite's ground coverage area during said timespan;
   c) using a data processing unit, selecting a geographical region for which the associated second time series data corresponds to the first time series data, wherein an elevated precipitation amount at a given time corresponds to a negative impact on the channel quality;
   d) storing an indication identifying said selected geographical region as an estimation of the terminal's geographical position in a third memory element.

Time series data describing a feature preferably comprises a series of time-stamped measurements of the feature.

The satellite terminal may preferably be a broadband satellite terminal, operating in Ku or Ka band.

Preferably, said selection step c) may comprise, using the data processing unit, computing a correlation factor between each of said second time series data and the first time series data, and wherein the selected geographical region corresponds to the second time series data yielding the lowest resulting correlation factor between channel quality and precipitation amount.

The indication of the channel quality may preferably comprise a carrier-to-noise ratio measured on the channel connecting the terminal to said satellite, wherein an elevated carrier-to-noise ratio indicates an elevated channel quality.

Said first time series data may preferably be measured by a quality measurement unit of said terminal, and it may preferably be transmitted via a data communication channel to a computing device that stores it in said first memory element.

Preferably said first time series data may be measured by a quality measurement unit of a gateway station, and it may preferably be transmitted via a data communication channel to a computing device that stores it in said first memory element. The gateway station may preferably participate in the feeder link toward the ground based terminal via the satellite.

Preferably the indication of the channel quality may comprise an indication of the received power, of the bit error rate experienced by data transmission on the channel between the satellite and the terminal, or a modulation and/or coding scheme that is used for transmitting data on said channel, or any combination of the above.

Preferably, said second time series data may be measured using a precipitation monitoring system, a weather monitoring system or an environmental monitoring system.

Preferably, said second time series data may be measured using a precipitation radar system comprising at least one precipitation radar station. The geographical regions according to an aspect of the invention may preferably correspond to the radar grid cells that are resolved by the precipitation radar system within the satellite's ground coverage area.

Said second time series data may preferably comprise precipitation forecast data.

The precipitation amount data may preferably comprise an indication of the liquid downpour volume per surface unit and unit of time.

Said timespan may preferably comprise one to twelve months.

Preferably, the selected geographical region may be indicated on a display unit operatively connect to said data processing unit.

According to another aspect of the invention, a device for estimating the geographical position of a terrestrial satellite terminal is provided. The device comprises a first memory element for storing first time series data, the first time series data providing an indication of the channel quality between the terminal and a satellite during a given timespan. The device further comprises a second memory element for storing a plurality of second time series data, wherein each second time series data indicates a precipitation amount for an associated geographical region within said satellite's ground coverage area during said timespan. The device further comprises a data processing unit, wherein the data processing unit is configured for:

- selecting a geographical region for which the associated second time series data corresponds to the first time series data, wherein an elevated precipitation amount at a given time corresponds to a negative impact on the channel quality;

- storing an indication identifying said selected geographical region as an estimation of the terminal's geographical position in a third memory element.

The data processing unit may further preferably be configured for carrying out the method steps of any aspects of the invention.

According to further aspect of the invention, a computing system is provided. The computing system comprises a device according to an aspect of the invention for estimating the geographical position of a terrestrial satellite terminal. The computing system further comprises at least one precipitation radar system for measuring precipitation amounts, or at least one precipitation forecast unit.

The system may further preferably comprise a display unit operatively connected to said device, wherein the device's data processing unit may further preferably be configured for carrying out the method in accordance with aspects of the invention.

According to another aspect of the invention, a computer program is provided. The computer program comprises computer readable code means, which, when run on a computer, causes the computer to carry out the method according to aspects of the invention.

In accordance with yet another aspect of the invention, a computer program product is provided. The computer program product comprises a computer readable medium on which the computer program according to aspects of the invention is stored.

The method provided by aspects of the invention allows for estimating the geographical position of ground based satellite terminals, without resorting to dedicated services such as Global Positioning System, GPS, or the like. By comparing downpour or precipitation data recorded during a given timespan for known locations to the data transmission channel quality experienced by satellite terminals, it becomes possible to conclude as to where these terminals are located. Indeed, the channel quality negatively correlates with the amount of downpour at any given moment in time. High levels of precipitation along the communication path decrease the carrier to noise ratio on the satellite downlink and uplink, increase the bit error rate and negatively impact the overall transmission quality. By using time series data, it becomes possible to disambiguate a number of possible locations. As only a limited number of locations, and ideally a single location, will be associated with both precipitation data and channel quality indications that correlated over time, the probability of estimating the correct location as being the location in which both time series exhibit maximum absolute correlation (low channel quality - high amounts or precipitation, high channel quality - low amounts of precipitation) increases. Tests have shown that the proposed method is successful in estimating the position of ground based terminals using precipitation data. The geographical resolution of the estimation depends merely on the geographical resolution of the available precipitation data. Sources of precipitation data include for example forecast data, or recorded data from a precipitation radar, or a network of precipitation radar stations. The proposed method and system enable satellite operators to localize satellite terminals in their network accurately and cost efficiently. One of the key services offered by satellite operators is broadband Internet access. However, satellite operators generally do not have reliable information about the location of the ground based satellite terminals. The proposed aspects of the invention allow to bridge this gap. Also, in broadcasting satellite networks having an enabled return link is enabled, this approach can be used for localizing the satellite ground terminals.

**Brief description of the drawings**

Several embodiments of the present invention are illustrated by way of figures, which do not limit the scope of the invention, wherein:

- Figure 1a shows the evolution in time of the carrier-to-noise ratio on a satellite link to a ground based terminal;
- Figure 1b shows the evolution in time of the rain intensity, as measured by a rain radar, at the location of the terminal for which the data in Figure 1a applies;
- Figure 2 is a workflow outlining the main steps of a preferred embodiment of the method in accordance with the invention;
- Figure 3 is an illustration of a system in accordance with a preferred embodiment of the invention, for implementing the method in accordance with a preferred embodiment of the invention;
- Figure 4 is an illustration of a system in accordance with a preferred embodiment of the invention, for implementing the method in accordance with a preferred embodiment of the invention.

**Detailed description of the invention**

This section describes the invention in further detail based on preferred embodiments and on the figures. Similar reference numbers will be used to describe similar or the same concepts throughout different embodiments of the invention. For example, references 100 and 200 respectively denote two different embodiments of a system for performing the method in accordance with aspects of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention.

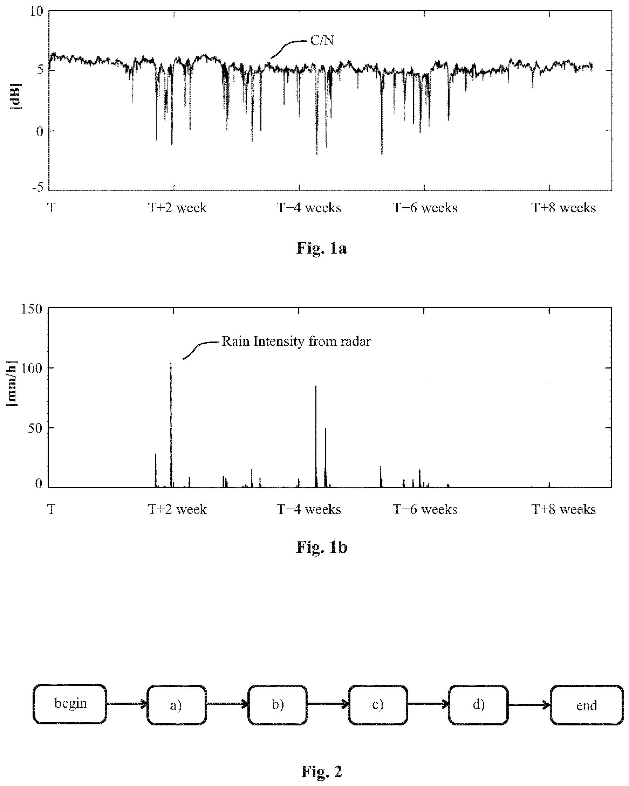

Figure 1a shows carrier-to-noise ratios as measured over two months on a satellite-terminal link of an experimental setup. A high carrier-to-noise ratio indicates a high channel quality, as the terminal is able to easily discern the transmission signal encoded on the carrier from noise, for example by filtering. A low carrier-to-noise ration indicates a poor channel quality. In poor channel conditions, the transmitted signal cannot be easily discerned from noise on the channel. Channel-to-noise ratio is thus an indicative measure of channel quality. Measurement of channel-to-noise ratio is as such known in the art and will not be discussed to any detail in the context of this invention. It may be measured on the forward link at the terminal by an appropriately configured data processing unit, and provided to a satellite operator via a communication channel, which may include a return link via the satellite, or a separate ground-based or wireless channel. Carrier-to-noise ratio of the return link may also be measured at a gateway station of a satellite operator.

Figure 1b shows rain radar data over the same period for the location where the satellite terminal is located. Spikes in the signal indicated high intensity rain and therefore large amounts of precipitation. It can be appreciated that the carrier-to-noise data has the high correlation with the rain radar data at the location.

The invention exploits this insight in a new meaningful way and uses it to localize ground based satellite terminals. The carrier-to-noise value, or any other measure indicating channel quality, is mainly impacted by rain intensity, in particular at high frequency bands such as Ka and Ku bands. Rain radars can provide information about the rain intensity with high granularity over a large coverage area on the ground. Time series data describing the channel quality on a satellite link of a specific terminal has high correlation with the precipitation data at the location corresponding to that satellite terminal. Therefore, high correlation between, for example, carrier-to-noise data and radar data over time indicates the location of the satellite terminals.

Figure 2 provides an overview of the main method steps in accordance with an aspect of the invention. In a first step a), time series data describing an indication of the channel quality between a ground-based terminal and a satellite is provided in a first memory element. The time series data spans a timespan ranging from several weeks to several months, or more than a year. Further time series data, covering a plurality of geographical regions, each time series describing a precipitation amount for an associated geographical region within the satellite's ground coverage area is provided in a second memory element. This time series data spans the same timespan as the time series data describing the channel quality. This corresponds to step b). The memory element may for example comprise a hard disk drive, HDD, a random-access memory, RAM, module, a solid-state drive, SDD or other known data memories. While the first and second memory elements may be physically distinct, they might alternatively also be collocated in a same physical memory element, of which they are different addressable parts. At the next step c), a processing unit, preferably programmed by a corresponding computer program code, and having at least read access to said first and second memory elements, reads and compares the plurality of time series data describing the precipitation amounts with the time series data describing the channel quality. The geographical region for which the associated precipitation amount time series data corresponds to the channel quality time series data is selected by the data processing unit as being the terminal's geographical position. This corresponds to step c), while at step d), the resulting location estimation is stored in a third memory element. The location estimation may be in the form of geographical coordinates, or in the form of a range of coordinates, or in any suitable form that uniquely identifies the estimated location of the satellite terminal. According to a preferred embodiment, the data processing unit computes a correlation value between the channel quality time series data and each of the precipitation amount time series data. Depending on the application, different known correlation factors, which are as such known in the art, may be used for this computation. Preferably, the geographical region of which the associated precipitation amount time series data yields the strongest correlation with the provided channel quality time series data, is selected as the location estimate. However, other selection methods may be used without departing from the scope of the present invention. For example, for each of the plurality of geographical regions, a comparison value may be computed through a weighted average of the correlation factors associate with neighbouring geographical regions. As another example, geometry of the ground-satellite link could be considered for estimating the slant path projection and estimating the location of the terminal. Among the comparison values, the highest may then be selected as being associated with the geographical region that corresponds to the location estimate. The result is preferably displayed as a graphical map on an operatively connected display unit, such as a computer monitor.

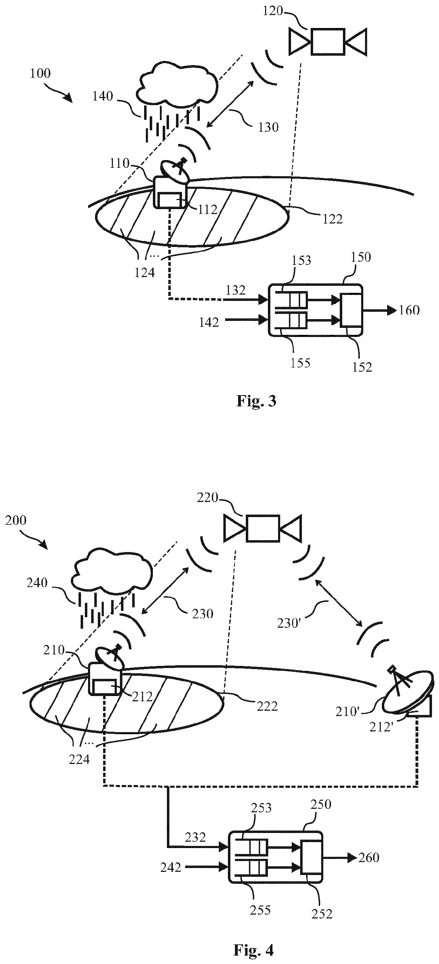

Figure 3 shows a system 100 corresponding to a preferred embodiment of the invention, for implementing the method according to aspects of the invention. A satellite 120 circles the Earth in an orbit, for example in a Low Earth Orbit, LEO, Medium Earth Orbit, MEO or on a Geostationary Orbit, GEO. The satellite has at least one transmit antenna, the beam or beams of which cover a ground spot or ground coverage area 122 on the Earth's surface. Within the ground coverage area 122, a ground based terminal 110, equipped with a receive antenna, is able to communicate with the satellite, or at least receive data from the satellite, via a wireless digital communication channel 130. While the ground coverage area 122 may not change and be constant in time, for example if a GEO satellite is considered, the ground coverage area 122 may as well change its position and/or shape in time, based on the satellite's motion with respect to the ground, and/or depending on the satellite's antenna beam pattern. In all of these cases, the extent and location of the ground coverage area at any given time is known to the satellite operator. While the following explanations are based on a constant ground coverage area 122, the principles apply straightforwardly for a dynamic ground coverage area 122. The features of the channel, i.e. round trip delay, bit error rate, channel to noise ratio, are generally monitored in order to adapt the transmission signalling and/or scheduling for best carrier usage. These features may be considered to be indicators of the channel's quality. A low bit error rate or high channel-to-noise ratio may for example indicate a high channel quality, whereas a high bit error rate or low channel-to-noise ratio on the link 130 may indicated a bad or low channel quality. The ground coverage area 122 may be segmented into geographical regions 124 at any given time. For the sake of clarity of the illustration, the regions 124 are shown as adjacent banners of the ground coverage area 122. The geographical regions 124 may have different shapes and me be overlapping without departing from the scope of the present invention. Precipitation, and mostly rain 140, coming down on the wireless path between the terminal 110 and the satellite 120, has a negative impact on the channel's 130 quality. A computing device 150 has a data processing unit 152, for example a central processing unit, CPU, that is operatively connected, for example through a data bus, to a first 153 and second memory element 155. While these components may be part of the same physical device, they may as well be physically distributed and interconnected using appropriate data communication channels. A first time series data 132, indicating the channel quality of link 130 over a given timespan is provided in the first memory element 153. The first time series data 132 may for example be estimated by a quality measurement unit 112 of the terminal 110, and transmitted to the computing device 150 using a data communication channel. A second time series data 142, indicating for each of the geographical regions 124 a precipitation amount 140 for the same timespan, is provided in the second memory element 155. The precipitation data 142 may for example be measured by a rain radar station that covers at least part of the ground spot 122. Clearly, the spatial extent of radar cells or radar voxels of a single radar station increases with increasing distance from the radar station, so that the resolution of a single radar is not entirely uniform. However, using a network of radar stations to provide precipitation amount data these variations in resolution may be mitigated and it is known to provide homogeneous spatial resolution using multiple radar stations covering the same area.

Such data is typically available from national weather services. Other sources of precipitation data, including for example forecast data, may equally be used without departing from the scope of the invention. The data processing unit 152 proceeds as described in the previous embodiment to compute and select the location estimation 160 for the terminal 110 among the geographical regions 124. Clearly, the precision of the location estimation depends, among others, on the available spatial resolution of the precipitation amount data 142. The location estimation 160 is preferably stored in a memory element, and may be transmitted to a different computing device and/or displayed on a display unit.

Figure 4 shows a system 200 corresponding to a preferred embodiment of the invention, for implementing the method according to aspects of the invention. A satellite 220 circles the Earth in an orbit, for example in a Low Earth Orbit, LEO, Medium Earth Orbit, MEO or on a Geostationary Orbit, GEO. The satellite has at least one transmit antenna, the beam or beams of which cover a ground spot or ground coverage area 222 on the Earth's surface. Within the ground coverage area 222, a ground based terminal 210, equipped with a receive antenna, is able to communicate with the satellite, or at least receive data from the satellite, via a wireless digital communication channel 230, corresponding to the user link. While the ground coverage area 222 may not change and be constant in time, for example if a GEO satellite is considered, the ground coverage area 222 may as well change its position and/or shape in time, based on the satellite's motion with respect to the ground, and/or depending on the satellite's antenna beam pattern. In all of these cases, the extent and location of the ground coverage area at any given time is known to the satellite operator. While the following explanations are based on a constant ground coverage area 222, the principles apply straightforwardly for a dynamic ground coverage area 222. The features of the channel, i.e. round trip delay, bit error rate, channel to noise ratio, are generally monitored in order to adapt the transmission signalling and/or scheduling for best carrier usage. These features may be considered to be indicators of the channel's quality. A low bit error rate or high channel-to-noise ratio may for example indicate a high channel quality, whereas a high bit error rate or low channel-to-noise ratio on the link 230 may indicated a bad or low channel quality. The ground coverage area 222 may be segmented into geographical regions 224 at any given time. Precipitation, and mostly rain 240, coming down on the wireless path between the terminal 210 and the satellite 220, has a negative impact on the channel's 230 quality. A computing device 250 has a data processing unit 252, for example a central processing unit, CPU, that is operatively connected, for example through a data bus, to a first 253 and second memory element 255. While these components may be part of the same physical device, they may as well be physically distributed and interconnected using appropriate data communication channels. A first time series data 232, indicating the channel quality of link 230 over a given timespan is provided in the first memory element 253. The first time series data 232 may for example be estimated by a quality measurement unit 212 of the terminal 210, and transmitted to the computing device 250 using a data communication channel. Alternatively, or in conjunction with the estimation at the terminal, a gateway station 210' may comprise a quality measurement unit 212' for estimating the quality of the user link 230. In this embodiment, the first time series data 232 stemming from the gateway station's 210' measurement is also communicated to the computing device 250. In typical scenarios, the gateway station 210' communicates with the satellite 220 using the feeder link 230', while the satellite relays information via the user link 230 to the terminal 210, and vice-versa. A second time series data 242, indicating a precipitation amount 240 for the same timespan for each of the geographical regions 224, is provided in the second memory element 255. The precipitation data 242 may for example be measured by a rain radar station that covers at least part of the ground spot 222. Other sources of precipitation data, including for example forecast data, may equally be used without departing from the scope of the invention. The data processing unit 252 proceeds as described in previous embodiments to compute and select the location estimation 260 for the terminal 210 among the geographical regions 224. Clearly, the precision of the location estimation depends, among others, on the available spatial resolution of the precipitation amount data 242. The location estimation 260 is preferably stored in a memory element, and may be transmitted to a different computing device and/or displayed on a display unit.

In typical satellite communication systems, end to end carrier-to-noise ratio are calculated at both forward links (gateway station-satellite-terminals) and return links (terminals-satellite-gateway station). End-to-end C/N is impacted by channel quality at both user links 230 (links between terminals and satellite) and feeder link 230' (link between satellite and gateway). However due to high power transmission, the available large antenna size at gateway stations 210' and other fade mitigation techniques deployed at feeder link (such as site diversity), it can be assumed that feeder links will experience clear sky condition, impact of rain on C/N at feeder link is negligible and C/N of feeder link will be very high compared to that of user link. Moreover, in typical transparent satellite system where satellite payload relays the signal to the destination without decoding the signal, the end to end C/N (in forward or return link), is calculated as follows:

$$\frac{1}{C_E} = \frac{1}{C_F} + \frac{1}{C_U}$$

Where $C_E$ is end to end C/N (in forward or return link), $C_F$ is C/N at feeder link (in forward or return link) and $C_U$ is C/N in user link (in forward or return link). As discussed above C/N at feeder link is normally much greater than C/N at user link, therefore

$$if\ C_F \gg C_U \Rightarrow \frac{1}{C_E} \cong \frac{1}{C_U} \Rightarrow C_E \cong C_U$$

So it can be safely assumed that end to end C/N is dominated by C/N at user link 230 and fluctuations of end-to-end C/N are mainly because of fluctuation of the C/N at user link and highly correlated with rain intensity at location of the terminal 210.

Experimental results have been obtained using a preferred embodiment of the invention, wherein a carrier-to-noise ratio was used as an indication of channel link quality. The satellite terminal was based in a location in Luxembourg, which may be considered as the ground truth. Rain radar data was provided by a rain radar system covering the area that includes the location. By using the proposed system, the estimated location of the ground based terminal was within a radius of 1km from the ground truth. This results was obtained using only two months' worth of carrier-to-noise and radar time series data shown. Increasing the timespan to include more historical data, improves on the accuracy of the estimation.

The estimated location may be used to generate a geographical map, wherein the color of each pixel or area represents a correlation value between carrier-to-noise data and the rain intensity associated with the corresponding geographical region, i.e. map pixel. Rain intensity has negative impact on the carrier-to-noise ratio. Therefore, high negative correlation between the carrier-to-noise and rain intensity time series at its corresponding location is to be expected. By finding a radar grid cell (bin) yielding the highest negative correlation with the carrier-to-noise time series estimated by the terminal, the location of the satellite terminal is estimated.

It should be noted that the carrier-to-noise ratio of the link would have the highest negative correlation with a rain event at the location of the satellite terminal due to the effect of a wet antenna. Therefore, if the correlation between carrier-to-noise data and radar data is computed, one is able to estimate the location of the terminal based on the highest value of correlation.

By way of a non-limiting example, the time series describing carrier-to-noise series, as estimated for the satellite link at a given terminal, may be denoted by s. The time series of rain intensity for radar grid cell or geographical region $(r, \varphi)$ may be denoted by $a(r, \varphi)$ where r is the distance from the radar and $\varphi$ is the azimuth with respect to radar location. Then correlation between s and $a\ (r\ \varphi)$ may then be computed as:

$$\rho_{s,a}(r,\varphi) = \frac{\sum\limits_{i=1}^{n}(s_i - \hat{s})(a_i - \hat{a})}{\sqrt{\sum\limits_{i=1}^{n}(s_i - \hat{s})^2}\sqrt{\sum\limits_{i=1}^{n}(a_i - \hat{a})^2}}$$

where $n$ is sample size of data giving the timespan of the time series, $\hat{a}$ and $\hat{s}$ are sample mean values of rain intensity and carrier-to-noise time series respectively; $a_i$ and $s_i$ are individual sample points indexed with $i$. It should be noted that in this case, the correlation factor for each geographical region or radar cell may take on a value between -1 and 1. One approach to estimate the location of terminal would be to select the grid cell with highest negative correlation (closest to -1). Another approach would be the selection based on weighted mean of neighbouring cells. It is possible to use different algorithms and approaches for generating the localization map. For instance, one could consider different correlation functions such as Spearman correlation coefficient, which is as such known in the art.

A factor that might affect radar accuracy is the impact of ice and snow. At high altitudes, it is possible the radar measures ice and snow instead of rain. However, currently known Doppler radars have dual polarization and can differentiate between rain and ice/snow. Therefore, ice and snow will not have a concerning impact on the rain measurements as well as the proposed localization method. Moreover, when a radar scans at different elevations, it is possible to obtain the CAPPI (constant-altitude planar position indicator) product that is a horizontal intersection of radar data. A typical altitude of the intersecting plane is 500m or 1000m. By using CAPPI at low altitudes we can make sure that radars measure mainly rain events.

A skilled person will be enabled by the present description and the accompanying figures to provide a computer program code for implementing the described functionalities without undue burden and without exercising inventive skill.

It should be understood that the detailed description of specific preferred embodiments is given by way of illustration only, since various changes and modifications within the scope of the invention will be apparent to the person skilled in the art. The scope of protection is defined by the following set of claims.

**Claims**

1. Method for estimating the geographical position of a terrestrial satellite terminal (110, 210), the method comprising the steps of:

   a) providing first time series data (132, 232) in a first memory element (153, 253), the first time series data providing an indication of the channel quality (130, 230) between the terminal (110, 210) and a satellite (120, 220) during a given timespan;

b) providing a plurality of second time series data (142, 242) in a second memory element (155, 255), wherein each second time series data indicates a precipitation amount (140, 240) for an associated geographical region (124, 224) within said satellite's ground coverage area (122, 222) during said timespan;

c) using a data processing unit (152, 252), selecting a geographical region (124, 224) for which the associated second time series data (142, 242) corresponds to the first time series data (132, 232), wherein an elevated precipitation amount at a given time corresponds to a negative impact on the channel quality;

d) storing an indication identifying said selected geographical region as an estimation of the terminal's geographical position (160, 260) in a third memory element.

2. The method according to claim 1, wherein said selection step c) comprises, using the data processing unit (152, 252), computing a correlation factor between each of said second time series data (142, 242) and the first time series data (132, 232), and wherein the selected geographical region corresponds to the second time series data yielding the lowest resulting correlation factor between channel quality and precipitation amount.

3. The method according to any of claims 1 or 2, wherein the indication of the channel quality comprises a carrier-to-noise ratio measured on the channel (130, 230) connecting the terminal to said satellite, wherein an elevated carrier-to-noise ratio indicates an elevated channel quality.

4. The method according to any of claims 1 to 3, wherein said first time series data (132) is measured by a quality measurement unit (112) of said terminal (110), and transmitted via a data communication channel to a computing device (150) that stores it in said first memory element (153).

5. The method according to any of claims 1 to 4, wherein said second time series data (142, 242) is measured using a precipitation radar system comprising at least one precipitation radar station, and wherein said geographical regions (124, 224) correspond to the radar grid cells that are resolved by the precipitation radar system within the satellite's ground coverage area (122, 222).

6. The method according to any of claims 1 to 4, wherein said second time series data (142, 242) comprises precipitation forecast data.

7. The method according to any of claims 1 to 6, wherein said second time series data (142, 242) comprises an indication of the liquid downpour volume per surface unit and unit of time.

8. The method according to any of claims 1 to 7, wherein said timespan comprises one to twelve months.

9. The method according to any of claims 1 to 7, wherein said selected geographical region is indicated on a display unit operatively connected to said data processing unit.

10. A device (150, 250) for estimating the geographical position of a terrestrial satellite terminal (110, 210), the device comprising a first memory element (153, 253) for storing first time series data (132, 232), the first time series data providing an indication of the channel quality (130, 230) between the terminal (110, 210) and a satellite (120, 220) during a given timespan, the device further comprising a second memory element (155, 255) for storing a plurality of second time series data (142, 242), wherein each second time series data (142, 242) indicates a precipitation amount (140, 240) for an associated geographical region (124, 224) within said satellite's ground coverage area (122, 222) during said timespan, the device further comprising a data processing unit (152, 252), wherein the data processing unit is configured for:

- selecting a geographical region (124, 224) for which the associated second time series data (142, 242) corresponds to the first time series data (132, 232), wherein an elevated precipitation amount at a given time corresponds to a negative impact on the channel quality;
- storing an indication identifying said selected geographical region as an estimation of the terminal's geographical position in a third memory element.

11. The device according to claim 10, wherein the data processing unit is further configured for carrying out the method steps of any of claims 1 to 8.

12. A computing system comprising a device according to any of claims 10 or 11 for estimating the geographical position of a terrestrial satellite terminal, further comprising at least one precipitation radar system for measuring precipitation amounts, or at least one precipitation forecast unit.

13. A computer program comprising computer readable code means, which, when run on a computer, causes the computer to carry out the method according to any of claims 1 to 9.

14. A computer program product comprising a computer readable medium on which the computer program according to claim 13 is stored.

**Patentansprüche**

1. Verfahren zur Schätzung der geografischen Position eines terrestrischen Satellitenterminals (110, 210), wobei das Verfahren die Schritte umfasst:

    a) Bereitstellen erster Zeitreihendaten (132, 232) in einem ersten Speicherelement (153, 253), wobei die ersten Zeitreihendaten einen Hinweis auf die Kanalqualität (130, 230) zwischen dem Terminal (110, 210) und einem Satelliten (120, 220) während einer bestimmten Zeitspanne liefern;
    b) Bereitstellen mehrerer zweiter Zeitreihendaten (142, 242) in einem zweiten Speicherelement (155, 255), wobei jede zweite Zeitreihendaten eine Niederschlagsmenge (140, 240) für eine zugehörige geografische Region (124, 224) innerhalb des Bodenabdeckungsbereichs (122, 222) des Satelliten während der Zeitspanne angibt;
    c) unter Verwendung einer Datenverarbeitungseinheit (152, 252), Auswählen einer geografischen Region (124, 224), für die die zugehörigen zweiten Zeitreihendaten (142, 242) den ersten Zeitreihendaten (132, 232) entsprechen, wobei eine erhöhte Niederschlagsmenge zu einem bestimmten Zeitpunkt einer negativen Auswirkung auf die Kanalqualität entspricht;
    d) Speichern einer Angabe in einem dritten Speicherelement, die die ausgewählte geografische Region identifiziert, als Schätzung der geografischen Position des Terminals (160, 260).

2. Verfahren nach Anspruch 1, wobei der Auswahlschritt c) unter Verwendung der Datenverarbeitungseinheit (152, 252) das Berechnen eines Korrelationsfaktors zwischen jedem der zweiten Zeitreihendaten (142, 242) und der ersten Zeitreihendaten umfasst (132, 232), und wobei die ausgewählte geografische Region den zweiten Zeitreihendaten entspricht, die den niedrigsten resultierenden Korrelationsfaktor zwischen Kanalqualität und Niederschlagsmenge ergeben.

3. Verfahren nach einem der Ansprüche 1 oder 2, wobei die Angabe der Kanalqualität ein Träger-Rausch-Verhältnis umfasst, das auf dem Kanal (130, 230) gemessen wird, der das Terminal mit dem Satelliten verbindet, wobei ein erhöhtes Träger-Rausch-Verhältnis auf eine erhöhte Kanalqualität hinweist.

4. Verfahren nach einem der Ansprüche 1 bis 3, wobei die ersten Zeitreihendaten (132) von einer Qualitätsmesseinheit (112) des Terminals (110) gemessen und über einen Datenkommunikationskanal an ein Computergerät übertragen werden (150), der es im ersten Speicherelement (153) speichert.

5. Verfahren nach einem der Ansprüche 1 bis 4, wobei die zweiten Zeitreihendaten (142, 242) unter Verwendung eines Niederschlagsradarsystems gemessen werden, das mindestens eine Niederschlagsradarstation umfasst, und wobei die geografischen Regionen (124, 224) den Radargitterzellen entsprechen, die vom Niederschlagsradarsystem innerhalb des Bodenabdeckungsbereichs des Satelliten (122, 222) aufgelöst werden.

6. Verfahren nach einem der Ansprüche 1 bis 4, wobei die zweiten Zeitreihendaten (142, 242) Niederschlagsvorhersagedaten umfassen.

7. Verfahren nach einem der Ansprüche 1 bis 6, wobei die zweiten Zeitreihendaten (142, 242) eine Angabe des Flüssigkeitsregenvolumens pro Oberflächeneinheit und Zeiteinheit umfassen.

8. Verfahren nach einem der Ansprüche 1 bis 7, wobei der Zeitraum ein bis zwölf Monate umfasst.

9. Verfahren nach einem der Ansprüche 1 bis 7, wobei die ausgewählte geografische Region auf einer Anzeigeeinheit angezeigt wird, die operativ mit der Datenverarbeitungseinheit verbunden ist.

10. Vorrichtung (150, 250) zum Schätzen der geografischen Position eines terrestrischen Satellitenterminals (110, 210), wobei die Vorrichtung ein erstes Speicherelement (153, 253) zum Speichern erster Zeitreihendaten (132, 232) umfasst, wobei die ersten Zeitreihendaten einen Hinweis auf die Kanalqualität (130, 230) zwischen dem Terminal (110, 210) und einem Satelliten (120, 220) während einer bestimmten Zeitspanne liefern, wobei das Gerät außerdem ein zweites Speicherelement (155, 255) umfasst. zum Speichern mehrerer zweiter Zeitreihendaten (142, 242), wobei jede zweite Zeitreihendaten eine Niederschlagsmenge (140, 240) für eine zugehörige geografische Region (124, 224) innerhalb des Bodenabdeckungsbereichs (122, 222) des Satelliten während der Zeitspanne angibt, wobei das Gerät weiterhin eine Datenverarbeitungseinheit (152, 252) umfasst, wobei die Datenverarbeitungseinheit konfiguriert ist für:

    - Auswählen einer geografischen Region (124, 224), für die die zugehörigen zweiten Zeitreihendaten (142, 242) den ersten Zeitreihendaten (132, 232) entsprechen, wobei eine erhöhte Niederschlagsmenge zu einem bestimmten Zeitpunkt einer negativen Auswirkung auf die Kanalqualität entspricht;

- Speichern einer Angabe in einem dritten Speicherelement, die die ausgewählte geografische Region identifiziert, als Schätzung der geografischen Position des Terminals.

**11.** Vorrichtung nach Anspruch 10, wobei die Datenverarbeitungseinheit weiterhin zur Durchführung der Verfahrensschritte nach einem der Ansprüche 1 bis 8 eingerichtet ist.

**12.** Computersystem mit einer Vorrichtung nach einem der Ansprüche 10 oder 11 zur Schätzung der geografischen Position eines terrestrischen Satellitenterminals, weiterhin umfassend mindestens ein Niederschlagsradarsystem zur Messung von Niederschlagsmengen, oder mindestens eine Niederschlagsvorhersageeinheit.

**13.** Ein Computerprogramm, das computerlesbare Codemittel umfasst, die, wenn sie auf einem Computer ausgeführt werden, den Computer veranlassen, das Verfahren nach einem der Ansprüche 1 bis 9 auszuführen.

**14.** Computerprogrammprodukt, umfassend ein computerlesbares Medium, auf dem das Computerprogramm nach Anspruch 13 gespeichert ist.

## Revendications

**1.** Procédé d'estimation de la position géographique d'un terminal de satellite terrestre (110, 210), le procédé comprenant les étapes de :

a) mettre à disposition une première série temporelle de données (132, 232) dans un premier élément de mémoire (153, 253), la première série temporelle de données fournissant une indication de la qualité de canal (130, 230) entre le terminal (110, 210) et un satellite (120, 220) pendant un intervalle de temps donné;

b) fournir une pluralité de secondes séries temporelles de données (142, 242) dans un deuxième élément de mémoire (155, 255), dans lequel chaque seconde série temporelle de données indique une quantité de précipitations (140, 240) pour une région géographique associée (124, 224) dans la zone de couverture au sol dudit satellite (122, 222) pendant ledit intervalle de temps;

c) en utilisant une unité de traitement de données (152, 252), sélectionner une région géographique (124, 224) pour laquelle la deuxième série temporelle de données y associée (142, 242) correspond à la première série temporelle de données (132, 232), une quantité élevée de précipitations à un moment donné correspondant à un impact négatif sur la qualité du canal;

d) enregistrer une indication identifiant ladite région géographique sélectionnée comme une estimation de la position géographique du terminal (160, 260) dans un troisième élément de mémoire.

**2.** Procédé selon la revendication 1, dans lequel ladite étape de sélection c) comprend, en utilisant l'unité de traitement de données (152, 252), le calcul d'un facteur de corrélation entre chacune desdites secondes séries temporelles de données (142, 242) et la première série temporelle des données (132, 232), et dans lequel la région géographique sélectionnée correspond à la seconde série temporelle de données donnant le facteur de corrélation résultant le plus faible entre la qualité du canal et la quantité de précipitations.

**3.** Procédé selon l'une quelconque des revendications 1 ou 2, dans lequel l'indication de la qualité du canal comprend un rapport porteuse sur bruit mesurée sur le canal (130, 230) reliant le terminal audit satellite, dans lequel un rapport élevé porteuse sur bruit indique une qualité de canal élevée.

**4.** Procédé selon l'une quelconque des revendications 1 à 3, dans lequel ladite première série temporelle de données (132) est mesurée par une unité de mesure de qualité (112) dudit terminal (110), et transmise via un canal de communication de données à un dispositif informatique (150) qui l'enregistre dans ledit premier élément de mémoire (153).

**5.** Procédé selon l'une quelconque des revendications 1 à 4, dans lequel lesdites secondes séries temporelles de données (142, 242) sont mesurées en utilisant un système radar de précipitations comprenant au moins une station radar de précipitations, et dans lequel lesdites régions géographiques (124, 224) correspondent aux cellules de la grille radar qui sont résolues par le système radar des précipitations dans la zone de couverture au sol du satellite (122, 222).

**6.** Procédé selon l'une quelconque des revendications 1 à 4, dans lequel lesdites secondes séries temporelles de données (142, 242) comprennent des données de prévision des précipitations.

**7.** Procédé selon l'une quelconque des revendications 1 à 6, dans lequel lesdites secondes séries temporelles de données (142, 242) comprennent une in-

**EP 3 855 643 B1** 20

dication du volume de pluie liquide par unité de surface et unité de temps.

8. Procédé selon l'une quelconque des revendications 1 à 7, dans lequel ledit intervalle de temps comprend un à douze mois.

9. Procédé selon l'une quelconque des revendications 1 à 7, dans lequel ladite région géographique sélectionnée est indiquée sur une unité d'affichage connectée fonctionnellement à ladite unité de traitement de données.

10. Dispositif (150, 250) pour estimer la position géographique d'un terminal de satellite terrestre (110, 210), le dispositif comprenant un premier élément de mémoire (153, 253) pour stocker une première série temporelle de données (132, 232), la première série temporelle de données fournissant une indication de la qualité du canal (130, 230) entre le terminal (110, 210) et un satellite (120, 220) pendant un intervalle de temps donné, le dispositif comprenant en outre un deuxième élément de mémoire (155, 255) pour stocker une pluralité de secondes séries temporelles de données (142, 242), dans lequel chaque seconde série temporelle de données (142, 242) indique une quantité de précipitations (140, 240) pour une région géographique associée (124, 224) dans ladite couverture au sol dudit satellite zone (122, 222) pendant ledit intervalle de temps, le dispositif comprenant en outre une unité de traitement de données (152, 252), l'unité de traitement de données étant configurée pour:

- sélectionner une région géographique (124, 224) pour laquelle la seconde série temporelle de données y associée (142, 242) correspond à la première série temporelle de données (132, 232), une quantité de précipitations élevée à un instant donné correspondant à un impact négatif sur la qualité du canal;
- enregistrer une indication identifiant ladite région géographique sélectionnée comme une estimation de la position géographique du terminal dans un troisième élément de mémoire.

11. Dispositif selon la revendication 10, dans lequel l'unité de traitement de données est en outre configurée pour exécuter les étapes du procédé selon l'une quelconque des revendications 1 à 8.

12. Système informatique comprenant un dispositif selon l'une quelconque des revendications 10 ou 11 pour estimer la position géographique d'un terminal de satellite terrestre, comprenant en outre au moins un système radar de précipitations pour mesurer les quantités de précipitations, ou au moins une unité de prévision de précipitations.

13. Programme informatique comprenant des moyens de code lisibles par ordinateur qui, lorsqu'il est exécuté sur un ordinateur, amène l'ordinateur à exécuter le procédé selon l'une quelconque des revendications 1 à 9.

14. Produit de programme informatique comprenant un support lisible par ordinateur sur lequel le programme informatique selon la revendication 13 est enregistré.

**Fig. 1a**

**Fig. 1b**

**Fig. 2**

Fig. 3

Fig. 4

**EP 3 855 643 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017116534 A1

- WO 9818214 A